# FASCICULE DE BREVET EUROPEEN

(11) **EP 2 621 774 B1**
(45) Date de publication et mention de la délivrance du brevet: **30.05.2018**
(21) Numéro de dépôt: 11741214.8
(22) Date de dépôt: 05.08.2011
(51) Int. Cl.: B60S 1/38, B60S 1/48, B60S 1/52, F16L 53/00

(54) **CONDUITE DE CHAUFFAGE ET DE TRANSPORT D'UN LIQUIDE LAVE-GLACE POUR BALAI D'ESSUIE-GLACE À DEUX RAMPES D'ARROSAGE, DISPOSITIF D'ESSUYAGE ET PROCÉDÉ DE FABRICATION**
ROHR ZUM BEHEIZEN UND TRANSPORTIEREN EINER WASCHFLÜSSIGKEIT FÜR EINEN WINDSCHUTZSCHEIBENWISCHERARM MIT ZWEI SPRÜHLEITUNGEN, WISCHERVORRICHTUNG UND HERSTELLUNGSVERFAHREN
PIPE FOR HEATING AND TRANSPORTING A WASHER FLUID FOR A WINDSCREEN WIPER ARM WITH TWO SPRAY LINES, WIPER DEVICE AND METHOD OF MANUFACTURE

(30) Priorité: 29.09.2010 FR 1003849
(43) Date de publication de la demande: 07.08.2013
(73) Titulaire: Valeo Systèmes d'Essuyage, 78322 Le Mesnil Saint Denis (FR)
(72) Inventeur: CALLUIERE, Johan, F-78370 Plaisir (FR); THEBAULT, Denis, F-63000 Clermont Ferrand (FR); COINTEREAU, Jean-François, F-78120 Rambouillet (FR); JARASSON, Jean-Michel, F-78321 Le Mesnil Saint Denis (FR); NEGRE, Pierre-Emmanuel, F-75014 Paris (FR)
(74) Mandataire: Callu Danseux, Violaine
(86) Numéro de dépôt international: PCT/EP2011/063552
(87) Numéro de publication internationale: WO 2012/041581

(56) Documents cités:
- EP-A2- 1 040 973
- WO-A1-2009/118286
- DE-A1- 4 118 926
- DE-A1- 4 402 372
- DE-A1-102008 049 269
- DE-A1-102008 049 270
- US-A- 4 038 519
- US-A- 5 327 614

## Description

La présente invention est relative à une conduite de chauffage et de transport d'un liquide lave-glace pour balai d'essuie-glace à double rampe d'arrosage, le nettoyage et le dégivrage d'une surface vitrée de véhicule automobile, telle que le pare-brise. La présente invention concerne également un dispositif d'essuyage comprenant une telle conduite et un procédé de fabrication d'une telle conduite.

Dans les systèmes de lave-glace existant, il est connu qu'un nettoyage amélioré des surfaces vitrées peut être obtenu en chauffant le liquide lave-glace avant qu'il ne soit projeté sur la surface vitrée. Par ailleurs, le liquide lave-glace chauffé peut aider à des opérations de dégivrage des surfaces vitrées.

Certains développements récents proposent en outre que le balai d'essuie-glace comporte deux rampes d'arrosage de chaque côté d'un bras du balai d'essuie-glace. Les rampes d'arrosage sont pourvues d'un ou d'une multitude de gicleurs ou orifices d'arrosage sous pression, permettant la distribution du liquide lave-glace sur la surface vitrée. Le liquide lave-glace est envoyé uniquement sur la partie avant du balai, c'est-à-dire que le liquide lave-glace est envoyé sur la rampe d'arrosage située du côté duquel le bras du balai d'essuie-glace avance pendant une phase montante du balayage et de l'autre côté pendant la phase descendante du balayage. Cet agencement permet d'essuyer instantanément le liquide lave-glace après son dépôt sur la surface vitrée, supprimant ainsi tout intervalle durant lequel la vision aurait pu être réduite.

Les gicleurs sont alimentés en liquide lave-glace contenu dans un réservoir par l'intermédiaire d'une pompe. Une conduite transporte et chauffe le liquide lave-glace prélevé dans le réservoir par la pompe vers le(s) gicleur(s) par exemple au moment ou l'on actionne la commande du lave-glace, généralement par le levier de commande placé à côté du volant et contrôlant entre autre l'actionnement des essuie-glaces.

Le chauffage proprement dit du liquide lave-glace peut être réalisé par un fil électrique de chauffage gainé plongé dans la conduite afin de chauffer le liquide lave-glace y circulant. Toutefois, la présence du fil électrique de chauffage dans la conduite peut engendrer des pertes de charge dans l'écoulement du liquide lave-glace, pouvant provoquer un abaissement de la pression de sortie de gicleur. Une solution consiste à prévoir un diamètre supérieur pour les conduites. Cependant, l'utilisation de grosses conduites s'avère difficilement compatible avec des dispositifs d'encombrement limité tels le balai double rampe dans lequel deux conduites sont intégrées. Par ailleurs, l'utilisation de pompes de débit plus important implique un surcoût du dispositif d'essuyage ainsi qu'une plus grande consommation de courant. DE-A-102008049269 montre le préambule de la revendication 1. Un des buts de la présente invention est de pallier à ces inconvénients en proposant une conduite de chauffage et de transport d'un liquide lave-glace améliorée, à moindre coût, de faible encombrement et limitant les pertes de charge dans l'écoulement du liquide lave-glace. Un autre but de la présente invention est de proposer un procédé de fabrication simple à mettre en oeuvre.

A cet effet, la présente invention a pour objet une conduite de chauffage et de transport d'un liquide lave-glace pour balai d'essuie-glace à deux rampes d'arrosage, caractérisée en ce qu'elle comporte un manchon extrudé d'au moins deux canaux de circulation du liquide lave-glace et dans lequel au moins deux conducteurs électriques de ladite conduite sont noyés dans la masse du manchon.

Les conducteurs électriques présentent des éléments chauffants ou sont destinés à être connectés à des éléments chauffants du balai d'essuie-glace. Ainsi le liquide lave-glace, l'électricité et/ou le chauffage peuvent être acheminés dans une même conduite jusqu'au(x) gicleur(s) sans obstacle dans le canal de circulation du liquide lave-glace tout en limitant l'encombrement et le coût de ladite conduite.

Selon une ou plusieurs caractéristiques de la conduite de chauffage et de transport prise seule ou en combinaison,
- ladite conduite comporte deux premiers conducteurs électriques munis d'éléments chauffants noyés dans le manchon entre les deux canaux de circulation du liquide lave-glace,
- ladite conduite comporte deux seconds conducteurs électriques noyés dans le manchon pour alimenter un dispositif de chauffage d'un balai d'essuie-glace,
- ledit manchon comporte une matière souple,
- les sections des conducteurs électriques noyés sont alignées au centre du manchon selon une direction médiane aux canaux de circulation,
- les sections des conducteurs électriques noyés et des canaux de circulation sont sensiblement alignées,
- les conducteurs électriques noyés dans le manchon sont disposés aux extrémités de la section du manchon,
- la section du manchon présente une forme générale en huit et ladite conduite comporte au moins un conducteur électrique fixé à l'extérieur du manchon, dans au moins un creux d'un flanc concave de la forme en huit,
- la périphérie de la section du manchon présente deux faces opposées centrales plates et deux portions extrêmes arrondies,
- une encoche est ménagée dans au moins une face centrale plate de la périphérie du manchon pour clipper au moins un conducteur électrique de ladite conduite de chauffage et de transport à l'extérieur du manchon,
- les conducteurs électriques noyés dans le manchon sont disposés de part et d'autre d'un plan médian aux canaux de circulation.

Selon un exemple de réalisation, ladite conduite de chauffage et de transport présente une amorce de rupture à au moins un bout de manchon pour séparer une première extrémité de conduite d'une deuxième extrémité de conduite, chaque extrémité de conduite comprenant un canal de circulation du liquide lave-glace et au moins un conducteur électrique. L'amorce de rupture permet de faciliter la séparation des extrémités de conduite en bout de manchon, les extrémités séparées pouvant être connectées ensuite à une rampe d'arrosage respective et/ou à une pompe.

Selon un premier exemple de réalisation de l'amorce de rupture, deux faces opposées centrales plates d'un bout de manchon présentent deux rainures biseautées selon une inclinaison complémentaire permettant d'amorcer la séparation d'une première et d'une deuxième extrémité de conduite.

Selon un deuxième exemple de réalisation de l'amorce de rupture, un bout de manchon présente une portion centrale amincie permettant d'amorcer la séparation d'une première et d'une deuxième extrémité de conduite.

L'invention a aussi pour objet un dispositif d'essuyage pour surface vitrée de véhicule automobile comportant un balai d'essuie-glace muni d'une première et d'une deuxième rampes d'arrosage de chaque côté du bras de balai d'essuie-glace, caractérisé en ce qu'il comporte en outre une conduite de chauffage et de transport telle que décrite précédemment, dont un premier canal de circulation du liquide lave-glace est relié d'une part à ladite première rampe d'arrosage du balai d'essuie-glace et d'autre part est destinée à être relié à une pompe et dont un deuxième canal de circulation du liquide lave-glace est relié d'une part à ladite deuxième rampe d'arrosage du balai d'essuie-glace et est destiné à être relié d'autre part, à une pompe.

Selon une caractéristique du dispositif d'essuyage, deux conducteurs électriques de ladite conduite de chauffage et de transport présentant des éléments de chauffage se prolongent dans le balai d'essuie-glace.

Le dispositif de chauffage du balai est ainsi alimenté sans nécessiter de connecteurs électriques intermédiaires entre la conduite de transport et de chauffage et le balai d'essuie-glace, ni de câbles électriques supplémentaires pour alimenter le dispositif de chauffage du balai d'essuie-glace, ce qui permet de réduire les coûts et de faciliter l'assemblage.

L'invention a encore pour objet un procédé de fabrication d'une conduite de chauffage et de transport d'un liquide lave-glace, caractérisé en ce qu'on insère au moins un conducteur électrique dans une matière en cours d'extrusion à travers une filière adaptée pour la mise en forme dudit manchon.

En insérant les conducteurs électriques simultanément à l'extrusion du manchon, on diminue le nombre d'étapes du procédé de fabrication, en le rendant très simple et peu couteux. L'implémentation dans le véhicule automobile est simplifié car il suffit de dénuder les conducteurs électriques pour les raccorder sans nécessiter les étapes compliquées d'introduction de ceux-ci dans le manchon à posteriori de l'extrusion.

Selon un premier exemple de réalisation du procédé de fabrication, le manchon extrudé présente deux canaux de circulation de liquide lave-glace et on sépare ensuite les bouts du manchon en une première et une deuxième extrémité de conduite libre comprenant chacune un canal de circulation de liquide lave-glace et au moins un conducteur électrique.

Selon un deuxième exemple de réalisation du procédé de fabrication, on insère un premier conducteur électrique dans une matière en cours d'extrusion à travers une filière adaptée pour la mise en forme d'une première portion de manchon présentant un premier canal de circulation pour le liquide lave-glace, on insère un deuxième conducteur électrique dans une matière en cours d'extrusion à travers une filière adaptée pour la mise en forme d'une deuxième portion de manchon présentant un deuxième canal de circulation pour le liquide lave-glace et on assemble lesdites première et deuxième portions de manchon entre deux extrémités libres de conduite.

D'autres caractéristiques et avantages de l'invention ressortiront de la description suivante, donnée à titre d'exemple, sans caractère limitatif, en regard des dessins annexés sur lesquels :
- la figure 1 représente une vue schématique d'éléments d'un dispositif d'essuyage pour balai d'essuie-glace à deux rampes d'arrosage,
- la figure 2 représente une vue partielle en perspective d'une conduite de chauffage et de transport du dispositif d'essuyage de la figure 1,
- la figure 3 représente une section de la conduite de la figure 2,
- la figure 4 représente une section d'une variante de la conduite de la figure 3,
- la figure 5 représente une section d'une autre variante de la conduite de la figure 3,
- la figure 6 représente une section d'une autre variante de la conduite de la figure 3,
- la figure 7 représente une section d'une autre variante de la conduite de la figure 3,
- la figure 8 représente une section d'une autre variante de la conduite de la figure 3,
- la figure 9 représente une section d'une autre variante de la conduite de la figure 3,
- la figure 10 représente une section d'une autre variante de la conduite de la figure 3,
- la figure 11 représente une section d'une autre variante de la conduite de la figure 3, et
- la figure 12 représente une section d'une autre variante de la conduite de la figure 3.

Sur ces figures, les éléments identiques portent les mêmes numéros de référence.

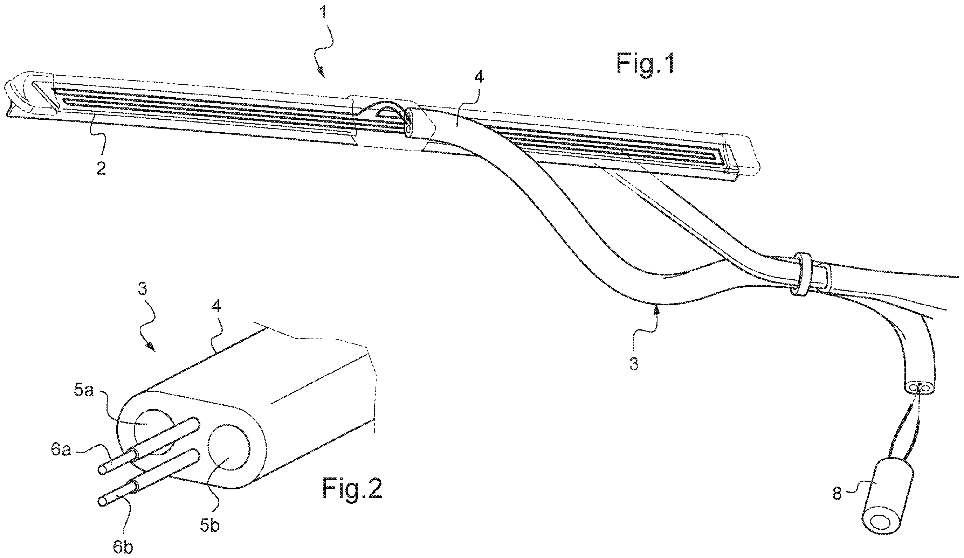

La figure 1 représente des éléments d'un dispositif d'essuyage pour surface vitrée de véhicule automobile 1. Le dispositif d'essuyage 1 comporte un balai d'essuie-glace 2 muni d'une première et d'une deuxième rampes d'arrosage de chaque côté d'un bras du balai d'essuie-glace 2 (non représenté). Les rampes d'arrosage sont pourvues d'un ou d'une multitude de gicleurs ou orifices d'arrosage sous pression, permettant la distribution du liquide lave-glace sur la surface vitrée. Le liquide lave-glace est envoyé uniquement sur la partie avant du balai, c'est-à-dire que le liquide lave-glace est envoyé sur la rampe d'arrosage située du côté duquel le bras du balai d'essuie-glace avance pendant une phase montante du balayage et de l'autre côté pendant la phase descendante du balayage. Cet agencement permet d'essuyer instantanément le liquide lave-glace après son dépôt sur la surface vitrée, supprimant ainsi tout intervalle durant lequel la vision aurait pu être réduite.

Le dispositif d'essuyage 1 comporte en outre une conduite de chauffage et de transport de liquide lave-glace 3 pour alimenter les rampes d'arrosage en liquide lave-glace contenu dans un réservoir du véhicule automobile par l'intermédiaire d'une pompe. On peut utiliser une pompe bidirectionnelle ou deux pompes monodirectionnelles du véhicule automobile (non représentées) pour chaque rampe d'arrosage.

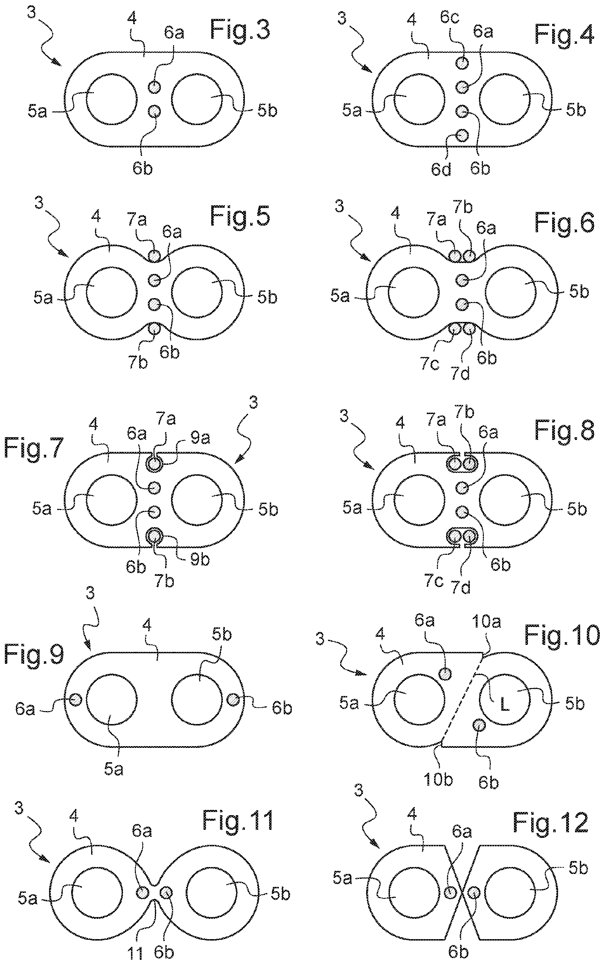

Comme on peut le voir sur les figures 2 et 3 représentant une section transversale de la conduite de chauffage et de transport 3, celle-ci comporte un manchon 4, en matériau souple et isolant, par exemple en caoutchouc. Ledit manchon 4 comporte deux canaux de circulation du liquide lave-glace 5a, 5b et au moins deux conducteurs électriques 6a, 6b obtenus par extrusion. Les conducteurs électriques 6a, 6b noyés dans la masse du manchon 4 sont introduit avec la matière de manchon extrudée.

Un premier canal de circulation du liquide lave-glace 5a est relié d'une part à la première rampe d'arrosage du balai d'essuie-glace 2 et d'autre part à une pompe. Un deuxième canal de circulation du liquide lave-glace 5b est relié d'une part à la deuxième rampe d'arrosage du balai d'essuie-glace 2 et d'autre part à une pompe.

Les conducteurs électriques 6a, 6b et les canaux de circulation 5a, 5b sont sensiblement parallèles entre eux. Dans ce premier exemple, la périphérie de la section transversale du manchon 4 (à l'extérieur du manchon) présente deux faces opposées centrales plates et deux portions extrêmes arrondies.

Les conducteurs électriques 6a, 6b présentent des éléments chauffants (le conducteur électrique est par exemple un fil résistif chauffant) ou sont destinés à être connectés à des éléments chauffants d'un dispositif de chauffage du balai d'essuie-glace de sorte que le liquide lave-glace prélevé dans le réservoir par le(s) pompe(s) vers la rampe d'arrosage respective soit chauffé. On obtient ainsi un nettoyage amélioré des surfaces vitrées en chauffant le liquide lave-glace avant qu'il ne soit projeté sur la surface vitrée. Par ailleurs, le liquide lave-glace chauffé participe au dégivrage des surfaces vitrées.

Pour cela, des conducteurs électriques gainés 6a, 6b dépassent de part et d'autre du manchon 4, pour pouvoir être dénudés à leurs extrémités et connectés ensemble d'un côté et à une alimentation de l'autre côté afin de former une boucle de courant. Pour le raccordement du canal de circulation de liquide lave-glace 5a, on prévoit des raccords à liquides.

Selon une première variante représentée sur les figures 2 et 3, les deux conducteurs électriques 6a, 6b sont noyés sensiblement au centre du manchon 4, leurs sections étant sensiblement alignées selon une direction médiane aux canaux de circulation 5a, 5b. Les conducteurs électriques 6a, 6b comportent des éléments de chauffage qui peuvent être raccordés à l'alimentation via un connecteur électrique 8 (voir figure 1).

En cours d'utilisation, les conducteurs électriques 6a, 6b chauffent le manchon 4 qui chauffe à son tour le liquide lave-glace lors de son écoulement dans les canaux de circulation 5a, 5b entre la pompe et la rampe d'arrosage respective.

Selon une variante non représentée, un premier conducteur électrique 6a comporte un élément de chauffage et un deuxième conducteur électrique 6b comporte un câble de masse. De même que précédemment, les conducteurs électriques 6a, 6b dépassent de part et d'autre du manchon 4 pour pouvoir être dénudés à leurs extrémités puis connectés ensemble d'un côté et à une alimentation de l'autre côté pour former une boucle de courant. Toutefois, la puissance de chauffage nécessaire est alors deux fois plus importante que dans le premier exemple de réalisation pour obtenir sensiblement la même température du liquide lave-glace. En outre, il est nécessaire de disposer le conducteur électrique comportant l'élément de chauffage entre les canaux de circulation du liquide lave-glace 5a, 5b pour s'assurer de chauffer les deux canaux de circulation du liquide lave-glace 5a, 5b.

Selon une autre variante de réalisation, les deux conducteurs électriques 6a, 6b noyés dans le manchon 4 sont destinés à alimenter un dispositif électrique tel qu'un dispositif de chauffage intégré du balai d'essuie-glace 2. On peut torsader les conducteurs électriques car ils ne sont pas destinés au chauffage de la conduite. On utilise ainsi la conduite de chauffage et de transport 3 pour acheminer le liquide lave-glace et l'électricité au balai-essuie glace 2, en fixant la disposition des conducteurs électriques 6a, 6b par rapport aux canaux de circulation de liquide 5a, 5b. En outre, l'implémentation dans le véhicule automobile est facilitée.

On peut également envisager une combinaison de ces exemples. Ainsi, la figure 4 représente une autre forme de réalisation dans laquelle le manchon 4 présente deux canaux de circulation du liquide lave-glace 5a, 5b et quatre conducteurs électriques 6a, 6b, 6c et 6d noyés. Les sections des conducteurs électriques 6a, 6b, 6c, 6d sont sensiblement alignées au centre du manchon 4 selon une direction médiane aux canaux de circulation 5a, 5b.

Une première paire de conducteurs électriques 6a, 6b comporte par exemple des éléments de chauffage et une deuxième paire de conducteurs électriques 6c, 6d comporte par exemple des câbles électriques pour l'alimentation d'un dispositif de chauffage intégré du balai d'essuie-glace 2. On peut ainsi chauffer à la fois le liquide lave-glace et le balai d'essuie-glace 2. Le liquide lave-glace, l'électricité et/ou le chauffage peuvent être acheminés dans une même conduite jusqu'à une rampe d'arrosage respective sans obstacle dans le canal de circulation du liquide lave-glace et en limitant l'encombrement et les coûts.

On peut en outre prévoir que les deux conducteurs électriques 6a, 6b de la conduite de chauffage et de transport 3 présentant des éléments de chauffage, se prolongent dans le balai d'essuie-glace 2 (voir figure 1). Le dispositif de chauffage du balai est ainsi alimenté sans nécessiter de connecteurs électriques intermédiaires entre la conduite de transport et de chauffage 3 et le balai d'essuie-glace 2, ni de câbles électriques supplémentaires pour alimenter le dispositif de chauffage du balai d'essuie-glace, ce qui permet de réduire les coûts et de faciliter l'assemblage.

Dans un deuxième mode de réalisation, une première paire de conducteurs électriques 6a, 6b comportant des éléments de chauffage sont noyés dans le manchon et au moins une deuxième paire de conducteurs électriques 7a, 7b sont fixés à l'extérieur du manchon 4. Les conducteurs électriques 6a, 6b, noyés dans le manchon 4 sont munis d'éléments chauffants et les conducteurs électriques 7a, 7b, fixés à l'extérieur du manchon 4 permettent par exemple d'alimenter un dispositif de chauffage d'un balai d'essuie-glace.

Selon une première variante de réalisation représentée en figure 5, la section du manchon 4 présente une forme générale en huit. La conduite de chauffage et de transport 3 comporte deux conducteurs électriques 6a, 6b, noyés dans le manchon 4 et deux conducteurs électriques 7a, 7b, fixés à l'extérieur du manchon 4, respectivement dans les deux flancs concaves de la forme en huit du manchon 4.

Selon une deuxième variante de réalisation représentée en figure 6, la forme générale de la section du manchon 4 présente plus précisément une forme d'altère de manière à fixer quatre conducteurs électriques 7a, 7b, 7c, 7d de la conduite de chauffage et de transport 3, à l'extérieur du manchon 4, deux à deux respectivement sur les deux flancs concaves de la forme en altère du manchon 4.

Selon une troisième variante de réalisation représentée en figure 7 dans laquelle la périphérie de la section du manchon 4 présente deux faces centrales opposées plates et deux portions extrêmes arrondies, deux encoches 9a, 9b sont respectivement ménagées dans les deux faces centrales plates opposées du manchon 4 pour clipper deux conducteurs électrique 7a, 7b à l'extérieur du manchon 4.

Selon une quatrième variante de réalisation représentée en figure 8 chacune des deux encoches 9a, 9b clippe respectivement deux conducteurs électriques 7a, 7b et 7c, 7d à l'extérieur du manchon 4.

On peut prévoir en outre de séparer les bouts de la conduite de chauffage et de transport 3 en deux extrémités de conduite libres sur une longueur par exemple comprise entre 50 et 100 millimètres de façon à pouvoir être connectées facilement. Les conducteurs électriques noyés dans le manchon 4 sont par exemple disposés de part et d'autre d'un plan médian aux canaux de circulation 5a, 5b de manière que chaque extrémité de conduite libre comprenne un canal de circulation de liquide lave-glace 5a, 5b et au moins un conducteur électrique 6a, 6b.

Par exemple, les conducteurs électriques 6a, 6b comportant des éléments de chauffage noyés dans le manchon 4 sont disposés sur les bords du manchon 4, aux extrémités de la section (figure 9). Dans ce cas, un premier conducteur électrique 6a est destiné à chauffer un premier canal de circulation du liquide lave-glace 5a et un second conducteur électrique 6b est destiné à chauffer un deuxième canal de circulation du liquide lave-glace 5b. En outre, la séparation des extrémités de conduite est facilitée dans cet agencement car il suffit de sectionner (verticalement sur la figure 4) le manchon 4 en son milieu pour séparer une première extrémité de conduite comprenant un canal de circulation du liquide lave-glace 5a et un conducteur électrique 6a d'une deuxième extrémité de conduite comprenant également un canal de circulation du liquide lave-glace 5b et un conducteur électrique 6b.

La conduite de chauffage et de transport 3 peut également présenter une amorce de rupture à au moins un bout de manchon 4 pour séparer une première extrémité de conduite d'une deuxième extrémité de conduite, chaque extrémité de conduite comprenant un canal de circulation du liquide lave-glace 5a, 5b et au moins un conducteur électrique 6a, 6b. L'amorce de rupture permet de faciliter la séparation des extrémités de conduite en bout de manchon, les extrémités séparées pouvant être connectées ensuite à une rampe d'arrosage respective et/ou une pompe respective.

Selon un premier exemple de réalisation de l'amorce de rupture représenté sur la figure 10, deux faces extérieures opposées d'un bout de manchon 4 présentent deux rainures biseautées 10a, 10b selon une inclinaison complémentaire permettant d'amorcer la séparation d'une première et d'une deuxième extrémité de conduite. Les conducteurs électriques 6a, 6b et les canaux de circulation du liquide lave-glace 5a, 5b sont répartis de part et d'autre d'une ligne en pointillés L sur la figure 6 reliant les rainures biseautées de sorte que chaque extrémité de conduite séparée comprenne un canal de circulation du liquide lave-glace 5a, 5b et un conducteur électrique 6a, 6b.

Selon un deuxième exemple de réalisation de l'amorce de rupture représenté sur la figure 11, un bout de manchon 4 présente une portion centrale amincie 11 permettant d'amorcer la séparation d'une première et d'une deuxième extrémité de conduite. Les conducteurs électriques 6a, 6b et les canaux de circulation du liquide lave-glace 5a, 5b sont répartis de part et d'autre de cette portion centrale amincie 9, les sections des conducteurs électriques noyés et des canaux de circulation étant sensiblement alignées, de sorte que chaque extrémité de conduite séparée comprenne un canal de circulation du liquide lave-glace 5a, 5b et un conducteur électrique 6a, 6b.

La conduite de chauffage et de transport 3 est obtenue par le procédé de fabrication suivant. On insère au moins un conducteur électrique 6a, 6b dans une matière en cours d'extrusion à travers une filière adaptée pour la mise en forme du manchon 4, ce qui permet de diminuer le nombre d'étapes du procédé de fabrication, le rendant très simple et peu couteux. L'implémentation dans le véhicule automobile est simplifié car il suffit de dénuder les conducteurs électriques pour les raccorder sans nécessiter les étapes compliquées d'introduction de ceux-ci dans le manchon à posteriori de l'extrusion. Les conducteurs électriques 6a, 6b peuvent être insérés déjà gainés pour faciliter leur mise en place dans le manchon extrudé. En outre, on peut utiliser des conducteurs électriques nus à noyer dans le manchon extrudé qui sert d'isolant. Dans ce dernier cas, on prévoit un moyen de séparation pour tenir les conducteurs électriques à l'écart l'un de l'autre pour leur insertion dans la filière.

On peut prévoir pour cela que la conduite soit fabriquée en un seul tenant et que le dispositif d'essuyage comporte des connecteurs électriques et des raccords à liquide pour raccorder respectivement les conducteurs électriques 6a, 6b entre eux et à leur alimentation et les canaux de circulation de liquide lave-glace 5a, 5b à leur pompe ou gicleur(s) d'arrosage respectif.

Selon un autre exemple de réalisation, on peut fabriquer une conduite de chauffage et de transport en un seul tenant et on sépare ensuite les bouts de la conduite de chauffage et de transport en deux extrémités de conduite libres, chaque extrémité de conduite libre comprenant un canal de circulation de liquide lave-glace 5a, 5b et au moins un conducteur électrique 6a, 6b.

On peut également prévoir de fabriquer une conduite dont les bouts de conduite sont déjà séparés. Par exemple, on insère un premier conducteur électrique 6a dans une matière en cours d'extrusion à travers une filière adaptée pour la mise en forme d'une première portion de manchon présentant un premier canal de circulation pour le liquide lave-glace 5a. Et, on insère un deuxième conducteur électrique 6b dans une matière en cours d'extrusion à travers une filière adaptée pour la mise en forme d'une deuxième portion de manchon présentant un deuxième canal de circulation pour le liquide lave-glace 5b. Puis, on assemble, par exemple par collage, les première et deuxième portions de manchon entre deux extrémités libres de conduite (figure 12).

## Revendications

1. Conduite de chauffage et de transport apte à être reliée d'une part à un balai d'essuie-glace à deux rampes d'arrosage et d'autre part à une pompe pour alimenter les rampes d'arrosage en liquide lave-glace contenu dans un réservoir du véhicule automobile par l'intermédiaire d'une pompe, comportant un manchon (4) extrudé d'au moins deux canaux de circulation du liquide lave-glace (5a, 5b) **caractérisée en ce que** au moins deux conducteurs électriques (6a, 6b, 6c, 6d) de ladite conduite sont noyés dans la masse du manchon (4), les conducteurs électriques (6a, 6b) et les canaux de circulation (5a, 5b) étant sensiblement parallèles entre eux, les sections desdits conducteurs électriques étant alignées au centre du manchon (4) selon une direction médiane aux canaux de circulation (5a, 5b) ou les sections des conducteurs électriques (6a, 6b) noyés et des canaux de circulation (5a, 5b) sont sensiblement alignées.

2. Conduite de chauffage et de transport selon la revendication 1, **caractérisée en ce qu'**elle comporte deux premiers conducteurs électriques (6a, 6b) munis d'éléments chauffants noyés dans le manchon (4) entre les deux canaux de circulation du liquide lave-glace (5a, 5b).

3. Conduite de chauffage et de transport selon la revendication 2, **caractérisée en ce qu'**elle comporte deux seconds conducteurs électriques (6c, 6d) noyés dans le manchon (4) pour alimenter un dispositif de chauffage d'un balai d'essuie-glace.

4. Conduite de chauffage et de transport selon l'une des revendications 1 à 3, **caractérisée en ce que** ledit manchon (4) comporte une matière souple.

5. Conduite de chauffage et de transport selon l'une des revendications 1 à 4, **caractérisée en ce que** les conducteurs électriques (6a, 6b) noyés dans le manchon (4) sont disposés aux extrémités de la section du manchon (4).

6. Conduite de chauffage et de transport selon l'une des revendications 1 à 5, **caractérisée en ce que** la section du manchon (4) présente une forme générale en huit et **en ce qu'**elle comporte au moins un conducteur électrique (7a, 7b, 7c, 7d) fixé à l'extérieur du manchon (4), dans au moins un creux d'un flanc concave de la forme en huit.

7. Conduite de chauffage et de transport selon l'une des revendications 1 à 6, **caractérisée en ce que** la périphérie de la section du manchon (4) présente deux faces opposées centrales plates et deux portions extrêmes arrondies.

8. Conduite de chauffage et de transport selon la revendication précédente, **caractérisée en ce qu'**une encoche (9a, 9b) est ménagée dans au moins une face centrale plate de la périphérie du manchon (4) pour clipper au moins un conducteur électrique (7a-7d) de ladite conduite de chauffage et de transport (3) à l'extérieur du manchon (4).

9. Conduite de chauffage et de transport selon l'une des revendications 1 à 8, **caractérisée en ce que** les conducteurs électriques (6a, 6b) noyés dans le manchon (4) sont disposés de part et d'autre d'un plan médian aux canaux de circulation (5a, 5b).

10. Conduite de chauffage et de transport selon la revendication précédente, **caractérisée en ce qu'**elle présente une amorce de rupture à au moins un bout de manchon pour séparer une première extrémité de conduite d'une deuxième extrémité de conduite, chaque extrémité de conduite comprenant un canal de circulation du liquide lave-glace (5a, 5b) et au moins un conducteur électrique (6a, 6b).

11. Conduite de chauffage et de transport selon la revendication 10, prise ensemble avec la revendication 7, **caractérisée en ce que** deux faces opposées centrales plates d'un bout de manchon présentent deux rainures biseautées (10a, 10b) selon une inclinaison complémentaire permettant d'amorcer la séparation d'une première et d'une deuxième extrémité de conduite.

12. Conduite de chauffage et de transport selon la revendication 10, **caractérisée en ce qu'**un bout de manchon présente une portion centrale amincie (11) permettant d'amorcer la séparation d'une première et d'une deuxième extrémité de conduite.

13. Dispositif d'essuyage pour surface vitrée de véhicule automobile comportant un balai d'essuie-glace (2) muni d'une première et d'une deuxième rampes d'arrosage de chaque côté du bras de balai d'essuie-glace, **caractérisé en ce qu'**il comporte en outre une conduite de chauffage et de transport selon l'une des revendications 1 à 12, dont un premier canal de circulation du liquide lave-glace (5a) est relié d'une part à ladite première rampe d'arrosage du balai d'essuie-glace (2) et d'autre part est destinée à être relié à une pompe et dont un deuxième canal de circulation du liquide lave-glace (5b) est relié d'une part à ladite deuxième rampe d'arrosage du balai d'essuie-glace (2) et est destiné à être relié d'autre part, à une pompe.

14. Dispositif d'essuyage selon la revendication 13, **caractérisé en ce que** deux conducteurs électriques (6a, 6b) de ladite conduite de chauffage et de transport présentant des éléments de chauffage se prolongent dans le balai d'essuie-glace (2).

15. Procédé de fabrication d'une conduite de chauffage et de transport d'un liquide lave-glace selon l'une des revendications 1 à 12, **caractérisé en ce qu'**on insère au moins un conducteur électrique (6a, 6b) dans une matière en cours d'extrusion à travers une filière adaptée pour la mise en forme dudit manchon (4).

16. Procédé de fabrication selon la revendication 15, **caractérisé en ce que** le manchon (4) extrudé présente deux canaux de circulation de liquide lave-glace (5a, 5b) et **en ce qu'**on sépare ensuite les bouts du manchon en une première et une deuxième extrémité de conduite libre comprenant chacune un canal de circulation de liquide lave-glace (5a, 5b) et au moins un conducteur électrique (6a, 6b).

17. Procédé de fabrication selon la revendication 15, **caractérisé en ce qu'**on insère un premier conducteur électrique (6a) dans une matière en cours d'extrusion à travers une filière adaptée pour la mise en forme d'une première portion de manchon présentant un premier canal de circulation pour le liquide lave-glace (5a), **en ce qu'**on insère un deuxième conducteur électrique (6b) dans une matière en cours d'extrusion à travers une filière adaptée pour la mise en forme d'une deuxième portion de manchon présentant un deuxième canal de circulation pour le liquide lave-glace (5b), et **en ce qu'**on assemble lesdites première et deuxième portions de manchon entre deux extrémités libres de conduite.

## Patentansprüche

1. Rohr zum Beheizen und Transportieren, das einerseits mit einem Scheibenwischerblatt mit zwei Wassersprühleisten und andererseits mit einer Pumpe zum Versorgen der Wassersprühleisten mit in einem Behältnis des Kraftfahrzeugs enthaltener Waschflüssigkeit mittels einer Pumpe verbunden werden kann, aufweisend eine Muffe (4), die mit mindestens zwei Waschflüssigkeitszirkulationskanälen (5a, 5b) extrudiert ist, **dadurch gekennzeichnet, dass** mindestens zwei elektrische Leiter (6a, 6b, 6c, 6d) des Rohrs in der Masse der Muffe (4) eingebettet sind, wobei die elektrischen Leiter (6a, 6b) und die Zirkulationskanäle (5a, 5b) im Wesentlichen parallel zueinander sind, wobei die Querschnitte der elektrischen Leiter in der Mitte der Muffe (4) entlang einer medialen Richtung bezüglich der Zirkulationskanäle (5a, 5b) ausgerichtet sind oder die Querschnitte der eingebetteten elektrischen Leiter (6a, 6b) und der Zirkulationskanäle (5a, 5b) im Wesentlichen aufeinander ausgerichtet sind.

2. Rohr zum Beheizen und Transportieren nach Anspruch 1, **dadurch gekennzeichnet, dass** es zwei erste elektrische Leiter (6a, 6b) aufweist, die mit Heizelementen versehen sind, welche zwischen den beiden Waschflüssigkeitszirkulationskanälen (5a, 5b) eingebettet sind.

3. Rohr zum Beheizen und Transportieren nach Anspruch 2, **dadurch gekennzeichnet, dass** es zwei zweite elektrische Leiter (6c, 6d) aufweist, die in der Muffe (4) eingebettet sind, um eine Vorrichtung zum Beheizen eines Scheibenwischerblatts zu versorgen.

4. Rohr zum Beheizen und Transportieren nach Anspruch 1 bis 3, **dadurch gekennzeichnet, dass** die Muffe (4) ein flexibles Material aufweist.

5. Rohr zum Beheizen und Transportieren nach einem der Ansprüche 1 bis 4, **dadurch gekennzeichnet, dass** die in der Muffe (4) eingebetteten elektrischen Leiter (6a, 6b) an den Enden des Querschnitts der Muffe (4) angeordnet sind.

6. Rohr zum Beheizen und Transportieren nach einem der Ansprüche 1 bis 5, **dadurch gekennzeichnet, dass** der Querschnitt der Muffe (4) eine im Wesentlichen achtförmige Gestalt aufweist und dass es mindestens einen elektrischen Leiter (7a, 7b, 7c, 7d) aufweist, der in mindestens einem Hohlraum einer konkaven Flanke der achtförmigen Gestalt an der Außenseite der Muffe (4) fixiert ist.

7. Rohr zum Beheizen und Transportieren nach einem der Ansprüche 1 bis 6, **dadurch gekennzeichnet, dass** der Umfang des Querschnitts der Muffe (4) zwei einander gegenüberliegende flache mittlere Seiten und zwei abgerundete Endteile aufweist.

8. Rohr zum Beheizen und Transportieren nach dem vorhergehenden Anspruch, **dadurch gekennzeichnet, dass** eine Kerbe (9a, 9b) in mindestens einer flachen mittleren Seite des Umfangs der Muffe (4) ausgebildet ist, um mindestens einen elektrischen Leiter (7a-7d) des Rohrs (3) zum Beheizen und Transportieren an der Außenseite der Muffe (4) anzuklemmen.

9. Rohr zum Beheizen und Transportieren nach einem der Ansprüche 1 bis 8, **dadurch gekennzeichnet, dass** die in der Muffe (4) eingebetteten elektrischen Leiter (6a, 6b) auf beiden Seiten einer Mittenebene bezüglich der Zirkulationskanäle (5a, 5b) angeordnet sind.

10. Rohr zum Beheizen und Transportieren nach dem vorhergehenden Anspruch, **dadurch gekennzeichnet, dass** es eine Sollbruchstelle an mindestens einem Muffenende zum Trennen eines ersten Rohrendes von einem zweiten Rohrende aufweist, wobei jedes Rohrende einen Waschflüssigkeitszirkulationskanal (5a, 5b) und mindestens einen elektrischen Leiter (6a, 6b) aufweist.

11. Rohr zum Beheizen und Transportieren nach Anspruch 10, in Verbindung mit Anspruch 7, **dadurch gekennzeichnet, dass** zwei einander gegenüberliegende flache mittlere Seiten eines Muffenendes zwei abgeschrägte Nuten (10a, 10b) entlang einer komplementären Neigung aufweisen, die das Einleiten der Trennung eines ersten und eines zweiten Rohrendes gestatten.

12. Rohr zum Beheizen und Transportieren nach Anspruch 10, **dadurch gekennzeichnet, dass** ein Muffenende einen verdünnten mittleren Teil (11) aufweist, der das Einleiten der Trennung eines ersten und eines zweiten Rohrendes gestattet.

13. Wischvorrichtung für eine Kraftfahrzeugscheibenfläche, aufweisend ein Scheibenwischerblatt (2), das mit einer ersten und einer zweiten Wassersprühleiste auf jeder Seite des Wischerarms versehen ist, **dadurch gekennzeichnet, dass** sie ferner ein Rohr zum Beheizen und Transportieren nach einem der Ansprüche 1 bis 12 aufweist, von dem ein erster Waschflüssigkeitszirkulationskanal (5a) einerseits mit der ersten Wassersprühleiste des Scheibenwischerblatts (2) verbunden ist und andererseits mit einer Pumpe verbunden werden soll und von dem ein zweiter Waschflüssigkeitszirkulationskanal (5b) einerseits mit der zweiten Wassersprühleiste des Scheibenwischerblatts (2) verbunden ist und andererseits mit einer Pumpe verbunden werden soll.

14. Wischvorrichtung nach Anspruch 13, **dadurch gekennzeichnet, dass** zwei elektrische Leiter (6a, 6b) des Rohrs zum Beheizen und Transportieren Heizelemente aufweisen, die sich in das Scheibenwischerblatt (2) erstrecken.

15. Verfahren zur Herstellung eines Rohrs zum Beheizen und Transportieren einer Waschflüssigkeit nach einem der Ansprüche 1 bis 12, **dadurch gekennzeichnet, dass** mindestens ein elektrischer Leiter (6a, 6b) während des Extrudierens durch eine zum Formen der Muffe (4) ausgeführte Düse in ein Material eingesetzt wird.

16. Herstellungsverfahren nach Anspruch 15, **dadurch gekennzeichnet, dass** die extrudierte Muffe (4) zwei Waschflüssigkeitszirkulationskanäle (5a, 5b) aufweist und dass danach die Enden der Muffe in ein erstes und ein zweites freies Rohrende getrennt werden, die jeweils einen Waschflüssigkeitszirkulationskanal (5a, 5b) und mindestens einen elektrischen Leiter (6a, 6b) aufweisen.

17. Herstellungsverfahren nach Anspruch 15, **dadurch gekennzeichnet, dass**
ein erster elektrischer Leiter (6a) während des Extrudierens durch eine zum Formen eines ersten Muffenteils, der einen ersten Zirkulationskanal (5a) für die Waschflüssigkeit aufweist, ausgeführte Düse in ein Material eingesetzt wird, ein zweiter elektrischer Leiter (6b) während des Extrudierens durch eine zum Formen eines zweites Muffenteils, der einen zweiten Zirkulationskanal (5b) für die Waschflüssigkeit aufweist, ausgeführte Düse in ein Material eingesetzt wird und der erste und der zweite Muffenteil zwischen zwei freien Rohrenden montiert werden.

## Claims

1. A pipe for heating and transporting able to be connected on one hand with a windscreen wiper blade with two spray lines, and on the other hand with a pump to supply the spray lines with washer fluid contained in a reservoir of the motor vehicle by means of a pump comprising: an extruded sleeve (4) with at least two washer fluid circulation channels (5a, 5b), **characterized in that** at least two electric wires (6a, 6b, 6c, 6d) of said pipe are embedded within the mass of the sleeve (4), the electric wires (6a, 6b) and the circulation channels (5a, 5b) being substantially parallel to each other, the cross-sections of the electric wires being aligned at the center of the sleeve (4) in a median direction with respect to the circulation channels (5a, 5b) or the cross-sections of the embedded electric wires (6a, 6b) and the circulation channels (5a, 5b) are substantially aligned.

2. The heating and transport pipe according to claim 1, further comprising two first electric wires (6a, 6b) provided with heating elements embedded in the sleeve (4) between the two circulation channels of the washer fluid (5a, 5b).

3. The heating and transport pipe according to claim 2, further comprising two second electric wires (6c, 6d) embedded in the sleeve (4) to power a heating device of a wiper blade.

4. The heating and transport pipe according to any one of claims 1 to 3, wherein said sleeve (4) includes a flexible material.

5. The heating and transport pipe according to any one of claims 1 to 4, wherein the electric wires (6a, 6b) embedded in the sleeve (4) are positioned at the ends of a cross-section of the sleeve (4).

6. The heating and transport pipe according to any one of claims 1 to 5, wherein the cross-section of the sleeve (4) is in the general shape of an "8" and said pipe includes at least one electric wire (7a, 7b, 7c, 7d) fixed to the outside of sleeve (4) in at least one hollow of a concave flank of the "8" shape.

7. The heating and transport pipe according to any one of claims 1 to 6, wherein a periphery of the cross-section of the sleeve (4) has two flat central opposite faces and two rounded end portions.

8. The heating and transport pipe according to the preceding claim, wherein a notch (9a, 9b) is formed in at least one flat central face of the periphery of the sleeve (4) to clip at least one electric wire (7a-7d) of said heating and transport pipe (3) to the outside of the sleeve (4).

9. The heating and transport pipe according to any one of claims 1 to 8, wherein the electric wires (6a, 6b) embedded in the sleeve (4) are positioned on either side of a median plane with respect to the circulation channels (5a, 5b).

10. The heating and transport pipe according to the preceding claim, further comprising a weakening rim at least at one end of the sleeve to separate a first pipe end from the second pipe end, each pipe end comprising the washer fluid circulation channel (5a, 5b) and at least one electric wire (6a, 6b).

11. The heating and transport pipe according to claims 10 and 7, wherein two flat central opposite faces of a sleeve end have two beveled slots (10a, 10b) at a complementary incline to facilitate the separation of a first and second pipe end.

12. The heating and transport device according to claim 10, wherein one sleeve end has a thinner central portion (11) to facilitate the separation of a first and second pipe end.

13. A wiper device for a glass surface of an automobile, comprising a wiper blade (2) provided with first and second spray lines on either side of the wiper blade, **characterized in that** it further comprises a heating and transport pipe according to any one of claims 1 to 12, wherein a first washer fluid circulation channel (5a) is connected on the one hand to said first spray line of the wiper blade (2), and on the other hand is configured for connection to a pump, and wherein the second circulation channel for the washer fluid (5b) is connected on the one hand to said second spray line of the wiper blade (2) and is configured for connection on the other hand to a pump.

14. The wiper device according to claim 13, wherein two electric wires (6a, 6b)of said heating and transport pipe have heating elements extending in the wiper blade (2) .

15. A method for manufacturing a pipe for heating and transporting a washer fluid according to any one of claims 1 to 12, the method comprising: inserting at least one electric wire (6a, 6b) in a material being extruded through a channel suitable for shaping said sleeve (4a).

16. The manufacturing method according to claim 15, wherein the extruded sleeve (4) has two washer fluid circulation channels (5a, 5b), and the ends of the sleeve are then separated into first and second free pipe ends each comprising the washer fluid circulation channel (5a, 5b) and the at least one electric wire (6a, 6b).

17. The manufacturing method according to claim 15, wherein the first electric wire (6a) is inserted into a material during extrusion through a channel suitable for shaping a first sleeve portion having a first washer fluid circulation channel (5a), and a second electric wire (6b) is inserted into a material during extrusion through a channel suitable for shaping a second sleeve portion having a second washer fluid circulation channel (5b), wherein said first and second sleeve portions are assembled between two free pipe ends.
